Europäisches Patentamt

**European Patent Office**

Office européen des brevets

(19)

(11) Publication number: **0 242 639**

**A1**

---

(12) # EUROPEAN PATENT APPLICATION

(21) Application number: **87104667.8**

(22) Date of filing: **30.03.87**

(51) Int. Cl.³: **A 61 C 13/26**
**A 61 C 13/00**

(30) Priority: **22.04.86 IT 2017786**
**22.04.86 IT 2017886**

(43) Date of publication of application:
**28.10.87 Bulletin 87/44**

(84) Designated Contracting States:
**AT BE CH DE ES FR GB GR LI NL SE**

(71) Applicant: **GILMAR S.R.L.**
**Via Roncoroni 26**
**I-22075 Lurate Caccivio (Como)(IT)**

(72) Inventor: **Grassetto, Gilberto**
**Via Villa Rongio 5**
**I-22077 Olgiate Comasco (Como)(IT)**

(74) Representative: **Luksch, Giorgio, Dr.-Ing. et al,**
**Ing. A. Giambrocono & C. S.r.l. Via Rosolino Pilo, 19/b**
**I-20129 Milano(IT)**

---

(54) **Method and means for manufacturing fixed dental prosthesis.**

(57) Method for manufacturing fixed dental prosthesis, such as bridges, utilizing seats formed in the opposite bearing teeth, the method providing: placing in the seats the ends of a metal body (3); applying a stopping or reconstructing mass above the gum of the edentulous area so as to get the mass linked to the body (3); extracting said metal body; finishing said prosthesis tooth or teeth by applying other stopping mass; inserting for the second time the metal body into the seats, to subsequently fixed thereto using stopping material; finishing the prosthesis tooth or teeth in situ. The metal body, preferably shaped as a metal bar, has a delimiting element (6) for protecting the tissue of the toothless gap.

Moreover, there is provided an adjustable device for containing the stopping or reconstructing material of the bearing teeth, consisting of two narrow bands each one partially wrapping one of the bearing teeth, so as to cover at least partially their proximal faces.

Fig. 1

EP 0 242 639 A1

Description

The present invention concerns a method for manufacturing fixed dental prosthesis, i.e. dental bridge apparatuses (physiological prosthesis), fixed to two natural teeth.

The invention also concerns a device for containing the stopping or reconstructing material used to manufacture the above mentioned prosthesis.

It is common knowledge that dental prosthesis, either fixed or total and mobile, have the purpose to substitute missing natural teeth by artificial teeth; the reasons why a dental prosthesis is applied generally concern the need to restore an efficient mastication and a correct phonation, i.e. a correct emission of sounds (dental sounds), and are also purely aesthetical ones.

The techniques used at the present time to manufacture and apply in situ fixed dental prosthesis, i.e. bridge dental prosthesis including one or more artificial teeth and elements for fixing them to the natural teeth, are very complex and take a lot of time for processing and testing, so requiring several sittings to patient and operator.

Therefore the main object of the present invention is to provide a method able to avoid the drawbacks inherent in the prior art techniques and, above all, to allow a dramatic reduction of the operative stages.

Another object of the invention is to provide a mechanical mean for realizing the above mentioned method.

In carrying out this method, as well as in other odontological works, e.g. occlusal-proximal stoppings, it may easily happen that part of the stopping material overflows the dental hollow and forms discontinuities on the teeth; this requires in the practice finishing operations, causing practical drawbacks and loss of time.

Therefore a further object of the present invention is to provide a containing device able to avoid the overflowing excesses of stopping or reconstructing material, necessary for fixing the article, just from the stage of cramming the hollow to be stopped.

A further object of the invention is to provide a containing device able to be quickly and safely eliminated when the work is finished, the device being so shaped as to avoid obstructing or limiting the required operations in the patient'mouth.

These and other objects, more clearly illustrated in the following description, are achieved by a method for manufacturing fixed dental prosthesis, such as bridges, utilizing seats formed in the opposite bearing teeth, the method providing: placing in the above mentioned seats the ends of a metal body; applying a stopping mass above the gum of the edentulous area so as to get the mass fixed to the above mentioned body so thereby creating the base of the prosthesis tooth or teeth; extracting the metal body prepared in this way; finishing, at least roughly, the prosthesis tooth or teeth by applying other stopping mass; inserting for the second time the metal body into the above mentioned seats, to be subsequently fixed thereto using stopping material, and finishing the prosthesis tooth or teeth in situ.

In order to embody the method of the invention, it is provided the use of a substantially rigid mechanical mean, formed, according to the invention, by a metal body able to subtend the gap between two bearing teeth and to insert its ends into seats previously formed inside the two bearing teeth.

According to a preferred embodiment of the invention, the metal body, acting as a true bridge, in order to define surfaces adjoining the teeth (natural or artificial) presents transversal arched edges, coupled to opposite concavities. Two of such arched edges, the most external ones, delimit at least partially the seats formed in the bearing teeth, whereas the internal ones are aimed to define, i.e. to delimit laterally (i.e. on the proximal face), at least partially the artificial tooth or teeth.

According to an advantageous aspect of the invention, the metal body includes intermediate screw means, able to fit the length of the metal body to the edentulous area whereon the artificial tooth or teeth are to be formed.

The invention will be better understood from the following detailed description, given by way of non limitative example only, of its preferred embodiments shown in the appended drawings, in which:
- Figure 1 is a schematic view of a first embodiment of the means for manufacturing the prosthesis according to the invention;
- figures 2 and 2a show respectively the same device represented in Figure 1, fixed to two natural teeth and not covered with stopping or reconstructing material, and a natural tooth arranged to receive one of the ends of such device;
- Figure 3 shows another executory embodiment of the device described in the former Figures, and
- Figure 4 shows a further executory embodiment of the device, further comprising a containing device applied to the natural bearing teeth.

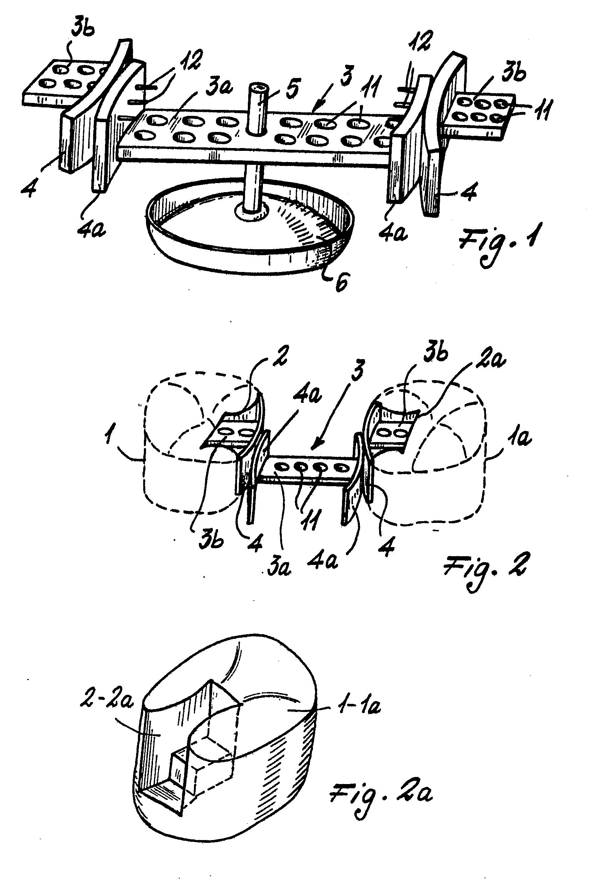

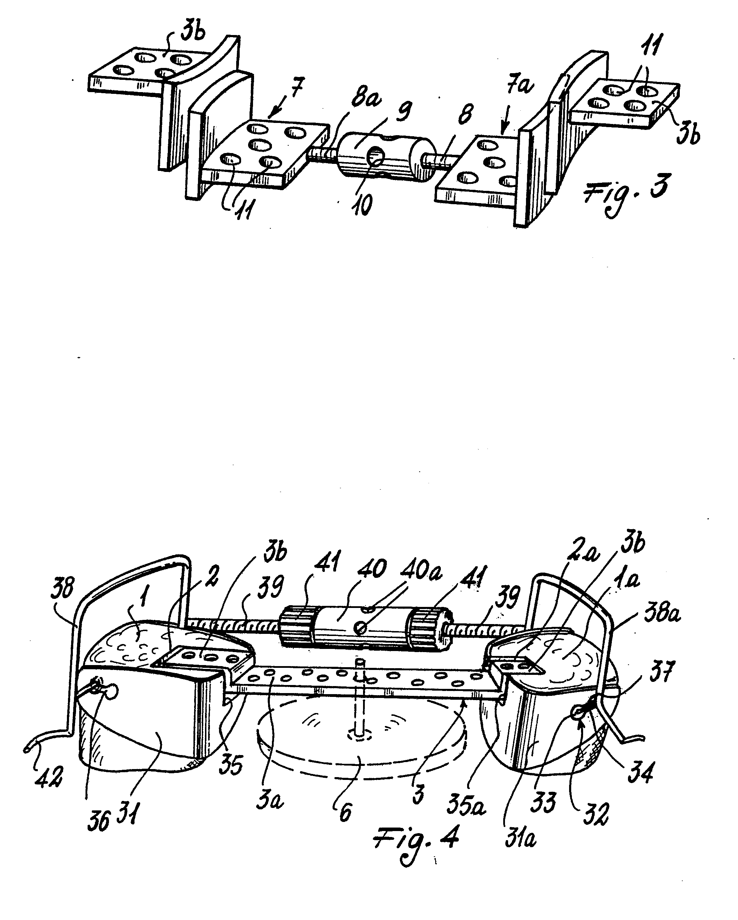

Referring to such Figures, particularly to Figures 1 and 2, the method and the device objects of the invention for manufacturing fixed dental prosthesis require at first to prepare the natural teeth which are meant to bear the prosthesis, i.e. teeth No. 1 and 1a (Figure 2), (limitedly to a possible devitalization, if necessary), and then to form, in the crown of both, hollows 2 and, respectively, 2a; such hollows are aligned and face each other, in order to allow the ends of a bearing mean, shaped as a metal bar 3 whose detailed description follows, to be inserted inside such hollows to disappearance.

The above mentioned metal bar 3 is essentially formed by a flat part 3a, substantially rectilinear (it may also be slightly arched according to the radius of curvature of the dental arch to which the prosthesis refers), and by two terminal flat parts 3b, which are meant to be received by the hollows 2-2a and to be fixed and covered thereto when the work is finished, by common stopping or reconstructing materials (e.g. composite materials). In this example, the ends 3b are staggered with regard to the elevation of the intermediate part 3a, and arched metal sectors 4-4a, coupled and with their own convex surfaces facing each other, are solidly interposed between the above mentioned ends 3b and the ends of the rectilinear bar; the above mentioned sectors may be manufactured with different heights and one of them, shown in 4, rests against the bearing tooth 1 and, respectively, 1a; the opposite sector 4a, on the contrary, forms a mean for retaining the stopping or reconstructing material (which forms the prosthesis artificial teeth) and at the same time forms, with the opposite sector, a gap useful to create an interstitial clearance between the bearing tooth and the adjoining artificial tooth. In the middle of member 3a may be provided a pole-shaped element 5, the element crossing a hole formed in the same member and provided, in the lower part, with a slightly concave element 6, substantially shaped as a little bowl, an arched plate, a disk or in any other appropriate shape substantially capable of being deformed. The concave element 6 is able to rest on the edentulous gum, forming a protective spacer from the gum tissue and at the same time a refecence for the height of the artificial tooth or teeth.

The succession of the operative stages for manufacturing a dental prosthesis according to the invention, using a device as already described, can be summarized as follows: after the manufacture of the opposite hollows 2, 2a, enough large to receive so disappearance the ends 3b of a bar enough long to bring sectors 4 into contact with the bearing teeth 1, 1a, the little bowl 6 is placed in contact with the edentulous gum and then a stopping material, e.g. a composite material, is fed so as to fix the little bowl 6 to the central part of the bar in the desired way. After the mass has become solid, everything has to be extracted and the shaping of the tooth is finished by feeding more stopping or reconstructing material. After ends 3b have been inserted for the second time inside hollows 2, 2a, such ends are fixed to the crown of the bearing teeth using common stopping materials, e.g. amalgam or similar materials, and at the same time are covered with the same or other material so as to complete the crown of the bearing teeth. When the prosthesis has been definitively positioned, the surfaces of the crowns of the prosthesis teeth are adjusted, following the usual procedures, to fit the surfaces of the crowns of the natural teeth of the opposite arch, in order to form a correct occlusion between prosthesis and opposite natural teeth.

Practically, then, the method according to the invention allows to manufacture quickly a fixed prosthesis, efficient from the anatomic and functional point of view, without requiring prints to be taken and a hand-made work to be prepared by an odontological technician, as, on the contrary, nowadays it usually happens.

Again according to the invention, such bar-shaped mechanical device may be advantageously manufactured in two parts 7-7a, either symmetrically equal or not (Figure 3), provided with pole-shaped threaded elements 8-8a engaged with an intermediate sleeve-shaped female thread 9; in this case, the above mentioned elements 8-8a and female thread 9 are oppositely threaded so as to allow, by rotating the female thread in the two opposite ways, to approach or move away parts 7-7a and so permit adjusting operations, i.e. widening or narrowing of parts 7-7a themselves, before covering them with stopping or reconstructing material. Holes 10, formed in the above mentioned female thread, are provided for operating the female thread and for receiving the pole 5 of the little bowl 6.

Moreover, in order to improve the fastness of the bar fixed to the stopping or reconstructing material, the bar itself and its ends 3b may be provided with passing-through holes 11 or other devices able to improve fixing, whereas sectors 4a may provide protruding pins 12 of different sizes. Bar 3 may be replaced by two parallel pole-
-shaped elements, and also manufactured with profile and sections different from those of a perfectly parallelepiped-shaped bar, without reducing functionality and efficaciousness of the whole device and of the method for manufacturing fixed prosthesis, as already described.

Figure 4 displays a very simplified variant of the device of Figure 1. Such variant consists of a drilled metal bar 3 formed by a flat central part 3a and two terminal parts 3b, which are received in hollows 2-2a formed in the crown of the two natural teeth 1, 1a, bearing the bridge. Also in this case a little bowl 9, (shown by the dashed line) may be provided as support on the edentulous gum.

Figure 4 also shows a device for containing the stopping or reconstructing material. Such device comprises two small bands 31 and 31a, originally flat. Such as made of metal or plastic material, of a size which allows them to wrap partially teeth 1, 1a when strained by a retractor device which will be described latter. Bands 31, 31a have the purpose to define hollows 2, 2a, concerning respectively the occlusal-proximal faces, of teeth 1, 1a avoiding overflows of the stopping material when such hollows are being crammed. Bands 31, 31a provide openings 35, 35a, corresponding to hollows 2, 2a where ends 3b of metal bar 3 will be received which fit perfectly ends 3b.

The bands show on their sides a shaped hole 32, having wide end 33 and narrow end 34. Taking advantage of its wide end, into hole 32 is introduced a pin or head 36, provided at the end with a thin stem 37 sized so as to be able to slide inside the narrow part 34 of the hole 32. Pins 36 and stems 37 are fixed, coupled and on opposite sides, to an U bolt 38-38a, substantially normal, in use, to bar 3. Between the two opposite U Bolts, is placed a mechanism with screw 39 and female thread 40, the screw and female thread being mutually engaged by contrary wise threads, so as to allow a straddling of U bolts 38-38a to take place and, consequently, a firm approaching of the bands to teeth 1-1a.

The screw and female thread 39-40 mechanism is fixed to the lateral uprights of the U bolts 39-40, as shown in Figure 4, in order to allow the easy filling with proper material of the gap between the two teeth and the edentulous gum. Inside the female thread 40 are formed transverse holes 40a, able to allow operating of the female thread itself, whereas screws 39 are fixed to U bolts 38, 38a or are integral with the same. For operating the female thread knurled
or roughened collars 41 may also be provided at its ends, for
direct manual operation, i.e. without tools.

The already described containing device may be used, for instance,
as follows: after the formation of dental hollows 2, 2a bands
31-31a are placed respectively on teeth 1 and 1a, and firmly
fastened by rotating the female thread 40; then the edentulous area
between teeth 1-1a is partially filled, involving the metal body 3
or 7 and 7a, the little bowl 6, if any, and the arched sectors
4-4a, if present. During this operation, bands 31, 31a prevent the
stopping material from overflowing the hollows 2-2a; after the
solidified mass is extracted and the prosthesis is finished outside
the mouth, the prosthesis is placed for the second time on its seat
and fixed to the teeth, as already described. When the prosthesis
is fixed, bands 31, 31a are removed by cutting.

The two U bolts 38, 38a may present lateral appendices 42 fitted,
for instance, for possibly positioning a template for the
preparation of hollows 2-2a.

9                                    0242639

Claims:

1. Method for manufacturing fixed dental prosthesis, such as bridges, using seats (2, 2a) formed in the opposite bearing teeth (1, 1a), the method providing: placing in such seats the ends of a metal body (3; 7, 7a); applying a stopping or reconstructing material above the edentulous gum so as to get it linked to such body thereby creating the base of prosthesis tooth or teeth; extracting the metal body prepared in this way; finishing, at least roughly, the prosthesis tooth or teeth by applying more stopping or reconstructing material; inserting for the second time the metal body into the above mentioned seats, to be subsequently fixed thereto using stopping or reconstructing material (e.g. composite materials or amalgam) and finishing the prosthesis tooth or teeth in situ.

2. Method as claimed in claim 1, characterized in that it provides the formation of the base of the artificial tooth on a mean (6) placed on the edentulous gum so as to protect the same and to create a reference for manufacturing the prosthesis.

3. Means for realizing the method as claimed in any of claims 1 and 2, characterized in that it comprises a metal body (3; 7, 7a) able to subtend the endetulous gap and to insert its ends (3b) into seats (2, 2a) previously formed inside the bearing teeth (1, 1a).

4. Means as claimed in claim 3, characterized in that the metal body (3; 7, 7a) comprises, in order to define surfaces adjoining the teeth (natural or artificial), transverse arched edges (4, 4a), coupled to opposite concavities.

5. Means as claimed in claim 3, characterized in that it comprises a delimiting element (6), protective of the tissue of the edentulous gap, on the side of the gum of the prosthesis tooth or teeth.

6. Means as claimed in claim 5, characterized in that the element (6) is shaped as a little bowl, an arched plate, a disk or in other appropriate shape, on condition that is substantially capable of being deformed, able to be supported on the edentulous gum and provided with at least one appendix (5) fitted for cooperating with the metal body (3; 7, 7a).

7. Means as claimed in claim 3, characterized in that the metal body (3; 7, 7a) is provided with passing-through holes (11) and/or protruding teeth (12) able to improve fixing of the reconstructing material.

8. Means as claimed in any one of claims 3 to 7, characterized in that the metal body (3; 7, 7a) is a small bar.

9. Means as claimed in any of claims 3 to 8, characterized in that such small bar comprises two parts (7, 7a) linked together by a longitudinally adjustable connection consisting of threaded pole-shape elements (8, 8a) engaged with a female thread (9), the threads of the above mentioned pole-shaped elements and of the above mentioned female thread being opposite in order to permit a straddling and, respectively, an approaching of the two parts forming the bar to take place.

10. Means as claimed in any one of the preceding claims, characterized in that it comprises a dental device for containing the reconstructing or stopping material, comprising two small bands (31, 31a) which can be applied to the proximal faces of teeth (1,

1a) so as to cover them at least partially, each of such bands being fixed to an U bolt (38, 38a), and a retractor mechanism comprising screw and female thread (39, 40) being placed between such U bolt.

11. Means as claimed in claim 10, characterized in that such bands (31, 31a) provide an opening 35) to be placed in correspondence with the dental hollows (2, 2a) meant to receive the ends (3b) of a body (3; 7, 7a) bearing the prosthesis.

12. Means as claimed in claim 10 or in claims 10 and 11, characterized in that such screw-female thread mechanism (39, 40) is preferably fixed to the lateral uprights of the above mentioned U bolts (38, 38a) to avoid hampering of the operations.

13. Means as claimed in any one of claims 10 to 12, characterized in that the bands (31, 31a) are removably fixed to the U bolts (38, 38a).

14. Means as claimed in any one of the preceding claims, characterized in that the U bolts (38, 38a) provide means (36) to be engaged with lateral openings (32) of the bands (31, 31a).

15. Means as claimed in any one of the preceding claims, characterized in that the U bolts (38, 38a) provide side appendices (42) fitted for placing a template for preparing the hollows (2, 2a).

Fig. 1

Fig. 2

Fig. 2a

0242639

Fig. 3

Fig. 4

0242639

# EUROPEAN SEARCH REPORT

Application number

EP 87 10 4667

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 641 670 (KARAGEORGE)<br><br>* column 1, line 39 - column 2, line 7; column 3, lines 1-37; figures 1-4 * | 1,3,7,8 | A 61 C 13/26<br>A 61 C 13/00 |
| A | DE-A-3 335 642 (GONTAR)<br><br>* claims 1, 2, 6; page 7, line 8 - page 10, line 17; figures 1-5 * | 1,3,7,8 | |
| A | US-A-4 457 714 (KLEIN)<br>* column 1, line 38 - column 2, line 24; column 3, lines 10-23; column 5, lines 16-25; figures 1-6 * | 1,3,8 | |
| A | EP-A-0 172 444 (KÖRBER et al.)<br><br>* page 9, lines 11-20; figures 1, 2, 7 * | 1,3,4,8,9 | TECHNICAL FIELDS SEARCHED (Int. Cl.4)<br><br>A 61 C 13/00 |

The present search report has been drawn up for all claims

| Place of search | Date of completion of the search | Examiner |
|---|---|---|
| BERLIN | 14-07-1987 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82